# EUROPÄISCHE PATENTSCHRIFT

(11) **EP 3 263 959 B1**
(45) Veröffentlichungstag und Bekanntmachung des Hinweises auf die Patenterteilung: **27.05.2020**
(21) Anmeldenummer: 17001084.7
(22) Anmeldetag: 26.06.2017
(51) Int. Cl.: F16K 11/076, F16K 11/085, F16K 27/06, E03C 1/00

(54) **SANITÄRARMATUR**
SANITARY FITTING
ROBINETTERIE

(30) Priorität: 01.07.2016 DE 102016008000
(43) Veröffentlichungstag der Anmeldung: 03.01.2018
(73) Patentinhaber: GROHEDAL Sanitärsysteme GmbH, 32457 Porta Westfalica (DE)
(72) Erfinder: Möller, Jörg, 32457 Porta Westfalica (DE); Koch, Christian, 32457 Porta Westfalica (DE)
(74) Vertreter: Gilles, Caroline

(56) Entgegenhaltungen:
- EP-A1- 2 759 747
- WO-A1-01/86179
- DE-A1-102013 011 598
- SU-A1- 1 229 492

## Beschreibung

Die Erfindung betrifft eine Sanitärarmatur mit einem Armaturenkörper nach dem Oberbegriff des Patentanspruches 1.

Aus der DE 10 2013 011 598 A1 ist eine gattungsgemäße Sanitärarmatur mit einem Armaturenkörper bekannt, der eine Mischwellenbohrung aufweist, in der eine benutzerseitig drehbetätigbare Mischwelle um eine Drehachse drehgelagert ist. In die Mischwellenbohrung münden ein Warmwasser-Einlass und ein Kaltwasser-Einlass sowie ein Mischwasser-Auslass. Die Mischwelle weist umfangsseitig eine Steuerkontur auf, die eine Mischkammer begrenzt. In Abhängigkeit von der benutzerseitig einstellbaren Mischwellen-Drehstellung können der Warmwasser-Einlass und/oder der Kaltwasser-Einlass strömungstechnisch über die wellenseitige Mischkammer mit dem Mischwasser-Auslass verbunden werden, um eine Mischwassertemperatur für das aus der Sanitärarmatur ausströmende Mischwasser einzustellen. Sofern die Mischwelle bis auf Anschlag in eine Warmwasser- oder Kaltwasser-Endstellung gedreht ist, ist die Mischwellen-Mischkammer von der Warm- oder Kaltwasser-Einlassöffnung strömungstechnisch entkoppelt, und zwar unter Bildung eines flüssigkeitsdichtenden Ventilspalts zwischen einer Dichtfläche der Mischwellen-Steuerkontur und einer Innenumfangswand der Mischwellenbohrung im Armaturenkörper.

Dieser Ventilspalt zwischen dem Warm- oder Kaltwasser-Einlass und der Mischkammer ist nicht hermetisch flüssigkeitsdicht, sondern vielmehr geringfügig flüssigkeitsdurchlässig, wodurch sich in der Warmwasser-/Kaltwasser-Endstellung ein sogenannter Querfluss durch den Ventilspalt bildet. Der Querfluss führt bei einer Kaltwasser-Endstellung der Mischwelle zu einer unerwünschten Temperaturerhöhung des aus der Sanitärarmatur ausströmenden Kaltwassers. Umgekehrt führt der Querfluss bei einer Warmwasser-Endstellung zu einer unerwünschten Temperatur-Reduzierung des aus der Sanitärarmatur ausströmenden Warmwassers.

Üblicherweise wird sowohl der Armaturenkörper als auch die Mischwelle aus einem Metall, zum Beispiel Messing, hergestellt. In diesem Fall kann die Mischwelle in einer engen Passung in der Mischwellenbohrung des Armaturenkörpers drehgelagert sein, und zwar mit entsprechend reduziertem Querfluss. Die enge Passung zwischen der Mischwelle und der Armaturenkörper-Mischwellenbohrung wird durch eine Spanbearbeitung in fertigungstechnisch aufwendiger Weise realisiert, so dass sich ein Bauteil-Spiel in einem Bereich von 1/100-Milimetern ergibt.

Speziell bei einer Kunststoff-Fertigung besteht die Problematik, dass sich die Bauteil-Toleranz zwischen dem Armaturenkörper und der Mischwelle erhöht, wodurch sich auch das Spaltmaß des flüssigkeitsdichtenden Ventilspalts zwischen der Warm- oder Kaltwasser-Einlassöffnung und der Mischkammer erhöht. Dies führt wiederum zu einem nachteilig großen Querfluss.

Aus der EP 2 759 747 A1 und der WO 01/86179 A1 sind jeweils Sanitärarmaturen bekannt, bei denen das Spaltmaß des flüssigkeitsdichtenden Ventilspalts mit Hilfe eines teilweise elastisch verformten O-Ringes reduziert wird.

Die Aufgabe der Erfindung besteht darin, eine Sanitärarmatur bereitzustellen, bei der die Funktionsfähigkeit der Sanitärarmatur in einfacher Weise erhöht ist.

Die Aufgabe ist durch die Merkmale des Patentanspruches 1 gelöst. Bevorzugte Weiterbildungen der Erfindung sind in den Unteransprüchen offenbart.

Die Erfindung beruht auf dem Sachverhalt, dass sich bei einer Bauteil-Fertigung mit größeren Bauteil-Toleranzen zwangsläufig auch der Querfluss erhöht. Vor diesem Hintergrund weist die Sanitärarmatur zumindest ein zwischen dem Armaturenkörper und der Mischwelle wirkendes Druckelement auf, das die Steuerkontur-Dichtfläche der Mischwelle gegen die Innenumfangswand der Mischwellenbohrung (nachfolgend auch als hohlzylindrischer Mischwellenraum bezeichnet) drückt, und zwar mit einer vordefinierten Druckkraft sowie unter Reduzierung des Ventilspalts zwischen der Mischwellen-Dichtfläche und der Innenumfangswand der Mischwellenbohrung.

Eine einfache sowie wirkungsvolle Druckkraft-Beaufschlagung des Ventilspalts ist für die Funktionsfähigkeit der Erfindung von großer Bedeutung. Vor diesem Hintergrund kann das Druckelement mit Bezug auf die Mischwelle diametral gegenüberliegend zu den Einlassöffnungen der Warm- und Kaltwasser-Einlässe angeordnet sein. Im Hinblick auf eine möglichst hermetische Abdichtung des Ventilspalts ist es bevorzugt, wenn die vom Druckelement ausgeübte Druckkraft, in der Umfangsrichtung betrachtet, lokal begrenzt nur auf den Ventilspalt wirkt, das heißt nicht in der Umfangsrichtung durchgängig gegen die Innenumfangswand des hohlzylindrischen Mischwellenraums wirkt.

In einer besonders einfachen sowie wirkungsvollen Ausführungsform kann das Druckelement als ein Ringsegment eines O-Ringes realisiert sein. Der O-Ring kann ein einfacher Dichtring zum Beispiel aus einem Elastomermaterial sein, wie er ansonsten in üblicher Weise zur Abdichtung zwischen der Mischwelle und der Mischwellenbohrung im Armaturenkörper eingesetzt wird. Von daher kann der O-Ring im unverformten Fertigungszustand einen umfangsseitig durchgängig konstanten kreisflächenförmigen Querschnitt aufweisen.

Der als Druckelement wirkende O-Ring kann in einer umlaufenden, radial nach außen offenen Ringnut der Mischwelle angeordnet sein. Damit die oben angegebene Druckkraft im O-Ring aufgebaut werden kann, ist es erforderlich, dass das zu den Einlassöffnungen diametral gegenüberliegende Ringsegment des O-Rings zwischen der Innenumfangswand der Mischwellenbohrung und der Mischwelle verpresst ist, wodurch sich die Druckkraft aufbaut.

Die oben erwähnte Verpressung des Ringsegmentes des O-Rings kann in folgender Weise technisch besonders einfach umgesetzt werden: So kann die Innenumfangswand der Mischwellenbohrung mit einer zusätzlichen Stützkontur ausgebildet sein. Die Raumverhältnisse zwischen Stützkontur und der in der Mischwellenbohrung drehgelagerten Mischwelle können so ausgelegt sein, dass das Ringsegment des O-Rings von der Stützkontur gegen Nutgrund der umlaufenden Mischwellen-Ringnut gedrückt wird, wodurch sich die auf den Ventilspalt wirkende Druckkraft aufbaut. Die Wirkungslinie der erzeugten Druckkraft verläuft - auch bei Drehbetätigung der Mischwelle - stets durch die Mischwellen-Drehachse sowie durch den Ventilspalt.

Wie oben erwähnt, bewirkt die an der Innenumfangswand ausgebildete Stützkontur das Verpressen des Ringsegmentes des O-Rings. Für ein wirkungsvolles Verpressen ist es bevorzugt, wenn die Stützkontur in radialer Flucht zum Ringsegment des O-Rings sowie zu dessen Mischwellen-Ringnut angeordnet ist. Zudem kann, in einer zur Drehachse rechtwinkligen Schnittebene betrachtet, die Innenumfangswand an der Stützkontur einen Zylinderradius aufweisen, der im Vergleich zum Zylinderradius von daran in Umfangsrichtung angrenzenden Innenumfangswand-Abschnitten reduziert ist.

In einer technischen Umsetzung kann die Ringnut, insbesondere deren Nutgrund, in der Umfangsrichtung durchgängig rotationssymmetrisch zur Mischwellen-Drehachse sein. Zusätzlich kann die Innenumfangswand des Armaturenkörpers rotationssymmetrisch zur Zylinderachse der Mischwellenbohrung sein, und zwar mit Ausnahme der oben erwähnten Stützkontur an der Innenumfangswand. Die Zylinderachse und die Mischwellen-Drehachse sind dabei zueinander koaxial ausgerichtet.

Die Auslassöffnung des Mischwasser-Auslasses und die Einlassöffnungen der Kalt- und Warmwasser-Einlässe sind in der Sanitärarmatur innerhalb eines Nassbereiches der Mischwellenbohrung im Armaturenkörper angeordnet. Der Nassbereich ist in der Axialrichtung üblicherweise beidseitig nach außen mittels Flüssigkeitsdichtungen, das heißt mit Hilfe von O-Ringdichtungen, von Trockenbereichen abgegrenzt. Die O-Ringdichtungen verlaufen ebenfalls in Mischwellen-Ringnuten, wobei die O-Ringdichtungen in der Umfangsrichtung in etwa mit gleichmäßiger Anpresskraft gegen die radial äußere Innenumfangswand der Mischwellenbohrung flüssigkeitsdicht gedrückt sind. Das erfindungsgemäße Druckelement ist nicht im Nassbereich, sondern vielmehr in der Axialrichtung außerhalb der Flüssigkeitsdichtungen in den Trockenbereichen angeordnet.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Figur 1: in einer Teilschnittdarstellung eine Sanitärarmatur;
- Figur 2: eine Detailansicht aus der Figur 1; und
- Figur 3: eine Schnittdarstellung entlang der Schnittebene A-A aus der Figur 2.

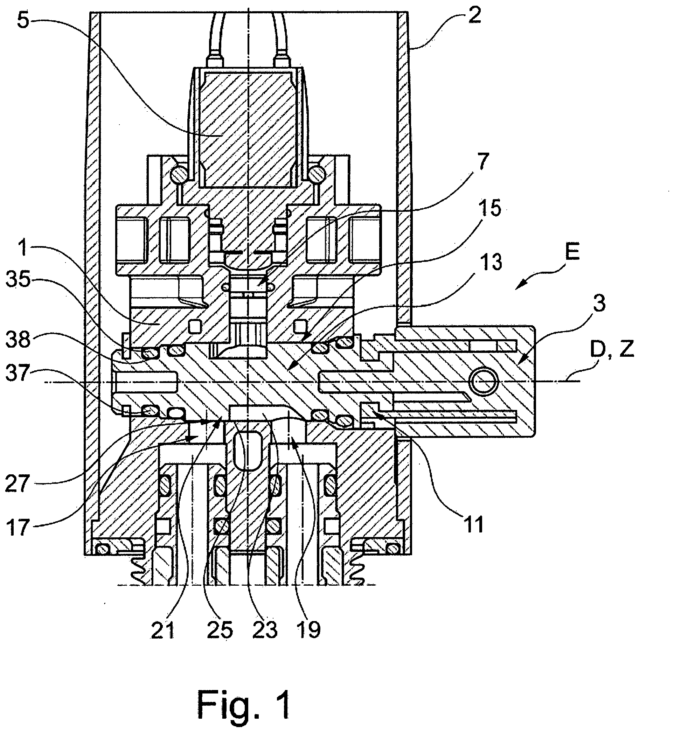

In der Figur 1 ist eine Sanitärarmatur gezeigt, die einen Armaturenkörper 1, zum Beispiel aus Kunststoff oder aus Messing, aufweist. Der Armaturenkörper 1 ist innerhalb einer Dekorhülse 2 angeordnet. Die Sanitärarmatur weist außerdem einen Mischhebel 3 auf, der um eine Drehachse D schwenkbar ist, um eine Mischwassertemperatur des aus einem nicht gezeigten Wasser-Auslauf der Sanitärarmatur ausströmenden Mischwassers einzustellen. Zudem ist im Armaturenkörper 1 ein infrarotbetätigbares Magnetventil 5 verbaut, das in einem Nichtgebrauchszustand der Sanitärarmatur einen zum Wasser-Auslauf geführten Mischwasser-Auslass 7 schließt.

Sofern ein Infrarotsensor unter dem Sanitärarmatur-Wasser-Auslauf Hände oder dergleichen erfasst, wird das Ventil 5 geöffnet, wodurch das Mischwasser aus dem Sanitärarmatur-Wasser-Auslauf ausströmen kann.

Der Mischhebel 3 ist unter Zwischenschaltung eines nicht näher beschriebenen Temperaturbegrenzers 11 an einer Mischwelle 13 befestigt. Diese ist in einer hohlzylindrischen Mischwellenbohrung 15 des Armaturenkörpers 1 um die Drehachse D drehgelagert.

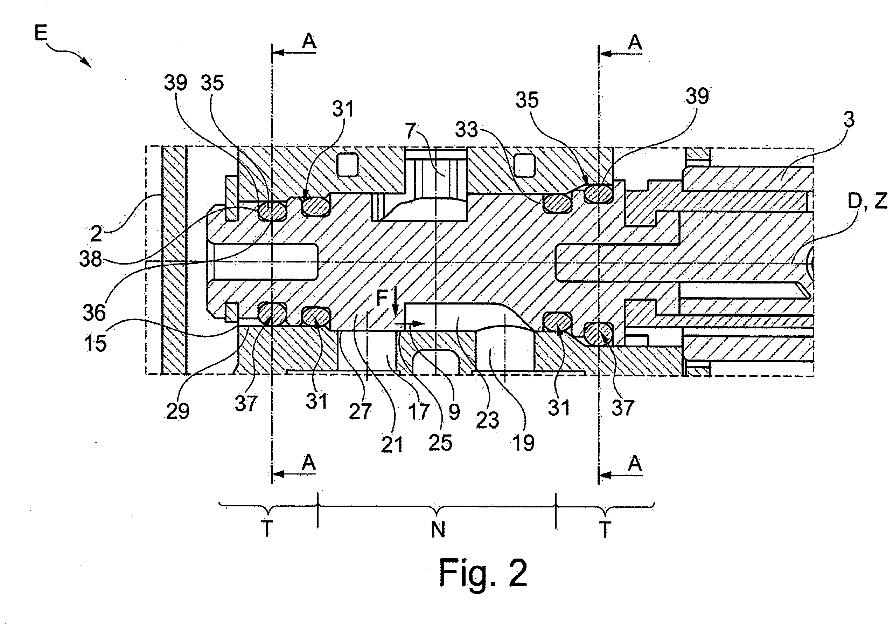

Wie aus der Figur 1 hervorgeht, weist die Sanitärarmatur an ihrer Unterseite jeweils einen Kaltwasser-Einlass 17 und einen Warmwasser-Einlass 19 auf, die mit dem Wasserversorgungsnetz verbunden sind und über Einlassöffnungen in die Mischwellenbohrung 15 münden. Der Mischwasser-Auslass 7 mündet mit Bezug auf die Drehachse D diametral gegenüberliegend zu den beiden Kalt- und Warmwasser-Einlässen 17, 19 in die Mischwellenbohrung 15. Die Mischwelle 13 weist außenumfangsseitig eine Steuerkontur 21 auf, die eine Mischkammer 23 begrenzt. Die Mischkammer 23 der Mischwelle 13 kann in Abhängigkeit von ihrer Drehstellung einen Strömungsdurchlass von den Kalt- und Warmwasser-Einlässen 17, 19 zur wellenseitigen Mischkammer 23 variieren. Dabei kann in einer in der Figur 1 oder 2 gezeigten Warmwasser-Endstellung E die Mischwellen-Mischkammer 23 von dem Kaltwasser-Einlass 17 strömungstechnisch entkoppelt sein. Umgekehrt kann in einer nicht gezeigten Kaltwasser-Endstellung die Mischwellen-Mischkammer 23 von dem Warmwasser-Einlass 19 strömungstechnisch entkoppelt sein. In der in der Figur 1 gezeigten Warmwasser-Endstellung E ist die strömungstechnische Entkopplung unter Bildung eines flüssigkeitsdichtenden Ventilspaltes 25 zwischen einer Dichtfläche 27 der Mischwellen-Steuerkontur 21 und der Innenumfangswand 29 der Mischwellenbohrung 15 realisiert.

Die Mündungsöffnungen des Mischwasser-Auslasses 7 sowie der Kalt- und Warmwasser-Einlässe 17, 19 sind in der Figur 2 innerhalb eines Nassbereiches N angeordnet. Der Nassbereich N ist in der Axialrichtung betrachtet beidseitig nach außen mittels Flüssigkeitsdichtungen 31 von axial äußeren Trockenbereichen T abgegrenzt. Die beiden Flüssigkeitsdichtungen 31 sind in gängiger Praxis als O-Ringdichtungen ausgeführt, die in Ringnuten 33 (Fig. 2) der Mischwelle 13 eingesetzt sind und flüssigkeitsdicht gegen die Innenumfangswand 29 drücken. Sowohl die Innenumfangswand 29 als auch die Ringnuten 33 sind mit Bezug auf die Zylinderachse Z, die zur Drehachse D koaxial liegt, rotationssymmetrisch ausgebildet.

Axial beidseitig außerhalb der beiden Flüssigkeitsdichtungen 31 ist die Mischwelle 13 jeweils in die Trockenbereiche T verlängert. In jedem der Trockenbereiche T ist jeweils ein Druckelement 35 angeordnet, das zwischen der Innenumfangswand 29 des Armaturenkörpers 1 und der Mischwelle 13 abgestützt ist. Mittels des Druckelements 35 wird eine Druckkraft F erzeugt, mit der die Mischwelle 13 mit ihrer Steuerkontur-Dichtfläche 27 gegen die Innenumfangswand 29 der Mischwellenbohrung 15 gedrückt wird, um den Ventilspalt 25 zu reduzieren.

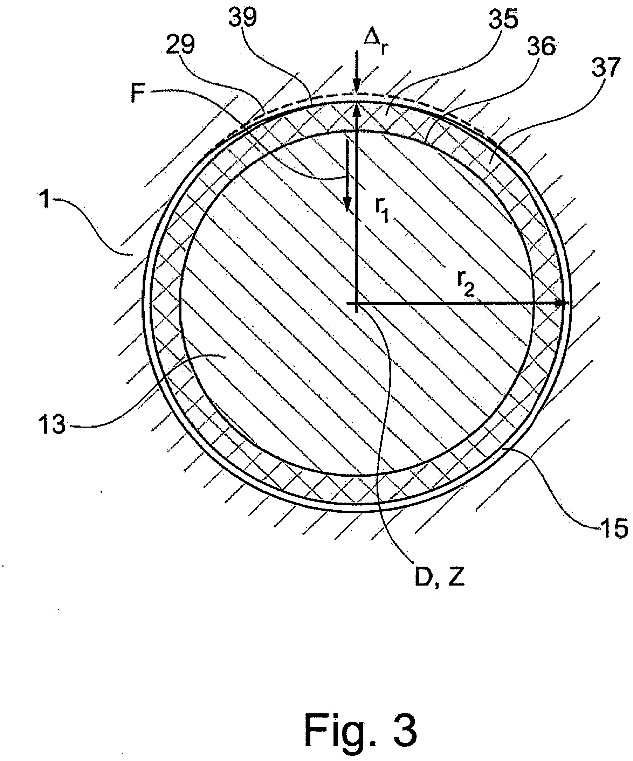

In dem gezeigten Ausführungsbeispiel ist das Druckelement 35 ein Ringsegment eines O-Rings 37, der aus einem elastischen Elastomermaterial gefertigt ist. Der O-Ring 37 ist in einer umlaufenden, radial nach außen offenen Ringnut 38 der Mischwelle 13 angeordnet. Im Unterschied zu einer herkömmlichen O-Ringdichtung ist der O-Ring 37 (in der in den Figuren gezeigten Einbaulage) nicht umfangsseitig durchgängig druckbeaufschlagt, sondern lediglich im Bereich des Ringsegments 35, das in den Figuren 2 und 3 diametral gegenüberliegend zu den Kalt- und Warmwasser-Einlässen 17, 19 verpresst ist. Durch die Verpressung des Ringsegments 35 baut sich die auf den Ventilspalt 25 ausgeübte Druckkraft F auf. In der Fig. 3 ist der O-Ring 37 durch eine Kreuzschraffur hervorgehoben. Die Kreuzschraffur ist im verpressten Ringsegment 35 des O-Rings 37 enger gezeichnet als in dem an das Ringsegment 35 anschließenden O-Ring-Anteil.

Die oben erwähnte Verpressung des Ringsegmentes 35 des O-Rings 37 ist in den Figuren 2 und 3 durch eine Stützkontur 39 realisiert, an der die Innenumfangswand 29 einen Zylinderradius r₁ aufweist. Der Zylinderradius r₁ ist in der Fig. 3 um einen Radialversatz Δr (Fig. 3) kleiner bemessen als der Zylinderradius r₂ von daran in der Umfangsrichtung angrenzenden Innenumfangswand-Abschnitten. In Umfangsrichtung außerhalb der Stützkontur 39 ist der O-Ring 37 somit nicht verpresst, sondern vielmehr überhaupt nicht oder nur geringfügig druckbeaufschlagt.

Auf diese Weise kann in der gezeigten Warmwasser-Endstellung E ein Querfluss q (Fig. 2) durch den flüssigkeitsdichtenden Ventilspalt 25 zwischen der Steuerkontur-Dichtfläche 27 und der Innenumfangswand 29 weiter reduziert oder sogar verhindert werden, und zwar trotz größerer Bauteiltoleranzen zwischen Mischwelle 13 und der Mischwellenbohrung 15.

### Bezugszeichenliste

- 1: Armaturenkörper
- 2: Dekorhülse
- 3: Mischhebel
- 5: Ventil
- 7: Mischwasser-Auslass
- 11: Temperaturbegrenzer
- 13: Mischwelle
- 15: hohlzylindrischer Mischwellenraum bzw. Mischwellenbohrung
- 17, 19: Kalt- und Warmwasser-Einlässe
- 21: Steuerkontur
- 23: Mischkammer
- 25: Ventilspalt
- 27: Dichtfläche
- 29: Innenumfangswand
- 31: Flüssigkeitsdichtungen
- 35: Druckelement
- 36: Nutgrund
- 37: O-Ring
- 38: Ringnut
- 39: Stützkontur
- D: Mischwellen-Drehachse
- Z: Zylinder-Achse
- E: Warmwasser-Endstellung
- N, T: Nass- und Trockenbereiche
- q: Querfluss
- r₁, r₂: Radien
- Δr: Radialversatz

## Patentansprüche

1. Sanitärarmatur mit einem Armaturenkörper (1), mit einem hohlzylindrischen Mischwellenraum (15), in dem eine benutzerseitig drehbetätigbare Mischwelle (13) um eine Drehachse (D) drehgelagert ist, wobei in den hohlzylindrischen Mischwellenraum (15) ein Warmwasser-Einlass (19) und ein Kaltwasser-Einlass (17) sowie ein Mischwasser-Auslass (7) münden, und wobei die Mischwelle (13) außenumfangsseitig eine Steuerkontur (21) aufweist, die eine Mischkammer (23) begrenzt, die in Abhängigkeit von der Mischwellen-Drehstellung den Warmwasser-Einlass (19) und/oder den Kaltwasser-Einlass (17) strömungstechnisch mit dem Mischwasser-Auslass (7) verbindet, um eine Mischwassertemperatur einzustellen, wobei in zumindest einer Mischwellen-Endstellung (E) die Mischwellen-Mischkammer (23) von der Warm- oder Kaltwasser-Einlassöffnung strömungstechnisch entkoppelt ist, und zwar unter Bildung eines flüssigkeitsdichtenden Ventilspalts (25) zwischen einer Dichtfläche (27) der Mischwellen-Steuerkontur (21) und der Innenumfangswand (29) des hohlzylindrischen Mischwellenraums (15), wobei die Sanitärarmatur zumindest ein zwischen dem Armaturenkörper (1) und der Mischwelle (13) wirkendes Druckelement (35) aufweist, das die Mischwelle (13) mit seiner Steuerkontur-Dichtfläche (27) gegen die Innenumfangswand (29) des hohlzylindrischen Mischwellenraums (15) drückt, und zwar mit einer Druckkraft (F) sowie unter Reduzierung des Ventilspalts (25); **dadurch gekennzeichnet, dass** die Auslassöffnung des Mischwasser-Auslasses (7) und die Einlassöffnungen der Kalt- und Warmwasser-Einlässe (17, 19) in einem Nassbereich (N) des hohlzylindrischen Mischwellenraums (15) angeordnet sind, und dass der Nassbereich (N) in der Axialrichtung beidseitig nach außen mittels Flüssigkeitsdichtungen (31), insbesondere O-Ringdichtungen, von Trockenbereichen (T) abgegrenzt ist, und dass das Druckelement (35) in zumindest einem der Trockenbereiche (T) angeordnet ist.

2. Sanitärarmatur nach Anspruch 1, **dadurch gekennzeichnet, dass** das Druckelement (35) mit Bezug auf die Mischwelle (13) diametral gegenüberliegend zu den Einlassöffnungen der Warm- und Kaltwasser-Einlässe (17, 19) angeordnet ist.

3. Sanitärarmatur nach Anspruch 1 oder 2, **dadurch gekennzeichnet, dass** das Druckelement (35) als ein Ringsegment eines O-Rings (37), insbesondere aus Elastomermaterial, realisiert ist, und dass der O-Ring (37) in einer umlaufenden, radial nach außen offenen Ringnut (38) der Mischwelle (13) angeordnet ist, und dass insbesondere das Ringsegment (35) des O-Rings (37) mit Bezug auf die Mischwelle (13) diametral gegenüberliegend zu den Einlassöffnungen bzw. zum Ventilspalt (25) angeordnet ist und/oder dass das Ringsegment (35) zwischen der Innenumfangswand (29) des hohlzylindrischen Mischwellenraums (15) und der Mischwelle (13) verpresst ist, und zwar unter Aufbau der Druckkraft (F), und dass insbesondere der in der Umfangsrichtung an das Ringsegment (35) anschließende O-Ring-Anteil nicht oder nur geringfügig verpresst bzw. druckbeaufschlagt ist.

4. Sanitärarmatur nach einem der Ansprüche 1, 2 oder 3, **dadurch gekennzeichnet, dass** vom Druckelement (35) ausgeübte Druckkraft (F), in der Umfangsrichtung betrachtet, lokal begrenzt nur auf den Ventilspalt (25) wirkt, und nicht in Umfangsrichtung durchgängig wirkt.

5. Sanitärarmatur nach Anspruch 3 oder 4, **dadurch gekennzeichnet, dass** zur Verpressung des Ringsegments (35) des O-Rings (37) die Innenumfangswand (29) des hohlzylindrischen Mischwellenraums (15) eine Stützkontur (39) aufweist, und dass die Stützkontur (39) das Ringsegment (35) des O-Rings (37) gegen einen Nutgrund (36) der umlaufenden Mischwellen-Ringnut (37) drückt, und zwar unter Aufbau der auf den Ventilspalt (25) wirkenden Druckkraft (F).

6. Sanitärarmatur nach Anspruch 4 oder 5, **dadurch gekennzeichnet, dass** die an der Innenumfangswand (29) des hohlzylindrischen Mischwellenraums (15) ausgebildete Stützkontur (39) in radialer Flucht zum Ringsegment (35) des O-Rings (37) sowie zu dessen Mischwellen-Ringnut (38) angeordnet ist.

7. Sanitärarmatur nach einem der Ansprüche 3 bis 6, **dadurch gekennzeichnet, dass** in einem zur Mischwellen-Drehachse (D) rechtwinkligen Querschnitt (A-A) betrachtet die Innenumfangswand (29) an der Stützkontur (39) einen Zylinderradius (r₁) aufweist, der im Vergleich zum Zylinderradius (r₂) von an die Stützkontur (39) in Umfangsrichtung angrenzenden Innenumfangswand-Abschnitten um einen Radialversatz (Δr) reduziert ist.

8. Sanitärarmatur nach einem der Ansprüche 3 bis 7, **dadurch gekennzeichnet, dass** die Ringnut (38), insbesondere deren Nutgrund (36), rotationssymmetrisch zur Mischwellen-Drehachse (D) ist, und/oder dass die Innenumfangswand (29) rotationssymmetrisch zur Zylinderachse (Z) des hohlzylindrischen Mischwellenraums (15) ist, und zwar mit Ausnahme der Stützkontur (39) an der Innenumfangswand (29), und/oder dass die Zylinderachse (Z) und die Mischwellen-Drehachse (D) zueinander koaxial sind.

9. Sanitärarmatur nach einem der Ansprüche 3 bis 8, **dadurch gekennzeichnet, dass** der O-Ring (37) im unverformten Fertigungszustand einen umfangsseitig durchgängig konstanten Querschnitt aufweist.

## Claims

1. A sanitary fitting having a fitting body (1) with a hollow cylindrical mixer shaft space (15), in which a mixer shaft (13), which a user can actuate by turning, is mounted rotatably about a rotation axis (D), wherein a hot water inlet (19) and a cold water inlet (17) and also a mixed water outlet (7) open into the hollow cylindrical mixer shaft space (15), and wherein the mixer shaft (13) has a control contour (21) on its outer circumference that delimits a mixing chamber (23), which fluidically connects the hot water inlet (19) and/or the cold water inlet (17), depending on the turning position of the mixer shaft, to the mixed water outlet (7) in order to adjust a mixed water temperature, wherein in at least one mixer shaft end position (E), the mixer shaft mixing chamber (23) is fluidically disconnected from the hot or cold water inlet opening, forming a fluidically sealing valve aperture (25) between a sealing surface (27) of the mixer shaft control contour (21) and the inner peripheral wall (29) of the hollow cylindrical mixer shaft space (15), wherein the sanitary fitting has at least one pressure element (35) acting between the fitting body (1) and the mixer shaft (13), which presses the control contour sealing surface (27) of the mixer shaft (13) against the inner peripheral wall (29) of the hollow cylindrical mixer shaft space (15) with a compressive force (F) and with reduction of the valve aperture (25) ; **characterized in that** the outlet opening of the mixed water outlet (7) and the inlet openings of the cold and hot water inlets (17, 19) are arranged in a wet area (N) of the hollow cylindrical mixer shaft space (15), and that the wet area (N), in the axial direction, is separated on the outside on both sides from dry areas (T) by means of fluid seals (31), in particular O-ring gaskets, and that the pressure element (35) is arranged in at least one of the dry areas (T).

2. The sanitary fitting according to Claim 1, **characterized in that** the pressure element (35) is arranged, with respect to the mixer shaft (13), diametrically opposite the inlet openings of the hot and cold water inlets (17, 19).

3. The sanitary fitting according to Claim 1 or 2, **characterized in that** the pressure element (35) is implemented as a ring segment of an O-ring (37) made in particular of an elastomer material, and that the O-ring (37) is arranged in a circumferential annular groove (38) of the mixer shaft (13) that opens radially outward, and that in particular the ring segment (35) of the O-ring (37) is arranged, with respect to the mixer shaft (13), diametrically opposite the inlet openings or the valve aperture (25) and/or that the ring segment (35) is compressed between the inner peripheral wall (29) of the hollow cylindrical mixer shaft space (15) and the mixer shaft (13), building up the compressive force (F), and that in particular the O-ring portion abutting on the ring segment (35) in the circumferential direction is not or is only slightly compressed or pressurized.

4. The sanitary fitting according to any one of Claims 1, 2 or 3, **characterized in that** the compressive force (F) exerted by the pressure element (35), viewed in the circumferential direction, acts only on the valve aperture (25) in a locally limited manner, and does not act in a circumferentially continuous manner.

5. The sanitary fitting according to Claim 3 or 4, **characterized in that** the inner peripheral wall (29) of the hollow cylindrical mixer shaft space (15) has a support contour (39) for compressing the ring segment (35) of the O-ring (37), and that the support contour (39) presses the ring segment (35) of the O-ring (37) against a groove bottom (36) of the circumferential mixer shaft annular groove (37), building up the compressive force (F) acting on the valve aperture (25).

6. The sanitary fitting according to Claim 4 or 5, **characterized in that** the support contour (39) formed on the inner peripheral wall (29) of the hollow cylindrical mixer shaft space (15) is radially aligned with the ring segment (35) of the O-ring (37) and with the mixer shaft annular groove (38) thereof.

7. The sanitary fitting according to any one of Claims 3 to 6, **characterized in that** the inner peripheral wall (29), viewed in a cross section (A-A) perpendicular to the mixer shaft rotation axis (D), has a cylinder radius (r₁) at the support contour (39) that is reduced by a radial offset (Δr) in comparison to the cylinder radius (r₂) of inner peripheral wall sections abutting on the support contour (39) in a circumferential direction.

8. The sanitary fitting according to any one of Claims 3 to 7, **characterized in that** the annular groove (38), in particular the groove bottom (36) thereof, is rotationally symmetrical to the mixer shaft rotation axis (D), and/or that the inner peripheral wall (29), with the exception of the support contour (39) on the inner peripheral wall (29), is rotationally symmetrical to the cylinder axis (Z) of the hollow cylindrical mixer shaft space (15) and/or that the cylinder axis (Z) and the mixer shaft rotation axis (D) are coaxial with each other.

9. The sanitary fitting according to any one of Claims 3 to 8, **characterized in that** the O-ring (37) in the undeformed production state has a cross section that is constant throughout the circumference.

## Revendications

1. Robinetterie sanitaire, pourvue d'un corps de robinet (1) doté d'un espace à arbre mélangeur (15) en forme de cylindre creux dans lequel un arbre mélangeur (13) susceptible d'être manœuvré en rotation par l'utilisateur est logé en rotation autour d'un axe de rotation (D), dans l'espace à arbre mélangeur (15) en forme de cylindre creux débouchant une entrée d'eau chaude (19) et une entrée d'eau froide (17), ainsi qu'une sortie d'eau mitigée (7) et l'arbre mélangeur (13) comportant sur sa périphérie extérieure un contour de commande (21) qui délimite un compartiment de mélange (23), qui en fonction de la position en rotation de l'arbre mélangeur relie fluidiquement l'entrée d'eau chaude (19) et/ou l'entrée d'eau froide (17) avec la sortie d'eau mitigée (7), pour régler une température d'eau mitigée, dans au moins une position finale (E) de l'arbre mélangeur, le compartiment de mélange (23) de l'arbre mélangeur étant fluidiquement désaccouplé de l'orifice d'entrée d'eau chaude ou d'eau froide, à savoir en formant un interstice de vanne (25) assurant l'étanchéité au liquide entre une surface d'étanchéité (27) du contour de commande (21) de l'arbre mélangeur et la paroi périphérique intérieure (29) de l'espace à arbre mélangeur (15) en forme de cylindre creux, la robinetterie sanitaire comportant au moins un élément de pression (35) agissant entre le corps de robinet (1) et l'arbre mélangeur (13), qui par sa surface d'étanchéité (27) de contour de commande, presse l'arbre mélangeur (13) contre la paroi périphérique intérieure (29) de l'espace à arbre mélangeur (15) en forme de cylindre creux, à savoir avec une force de pression (F) et en réduisant l'interstice de vanne ; **caractérisée en ce que** l'orifice de sortie de la sortie d'eau mitigée (7) et les orifices d'entrée des entrées (17, 19) d'eau froide et d'eau chaude sont placés dans une zone humide (N) de l'espace à arbre mélangeur (15) en forme de cylindre creux et **en ce que** la zone humide (N) est délimitée de part et d'autre vers l'extérieur dans la direction axiale par rapport à des zones sèches (T) au moyen de joints à liquide (31), notamment de joints toriques et **en ce que** l'élément de pression (35) est placé dans au moins l'une des zones sèches (T).

2. Robinetterie sanitaire selon la revendication 1, **caractérisée en ce que** l'élément de pression (35) est placé de manière diamétralement opposée en rapport à l'arbre mélangeur (13) aux orifices d'entrée des entrées (17, 19) d'eau chaude et d'eau froide.

3. Robinetterie sanitaire selon la revendication 1 ou 2, **caractérisée en ce que** l'élément de pression (35) est réalisé sous la forme d'un segment annulaire d'un joint torique (37), notamment en une matière élastomère et **en ce que** le joint torique (37) est placé dans une rainure annulaire (38) périphérique de l'arbre mélangeur (13), ouverte sur l'extérieur en direction radiale et **en ce que** notamment le segment annulaire (35) du joint torique (37) est placé de manière diamétralement opposée en rapport à l'arbre mélangeur (13) aux orifices d'entrée ou à l'interstice de vanne (25) et/ou **en ce que** le segment annulaire (35) est comprimé entre la paroi périphérique intérieure (29) de l'espace à arbre mélangeur (15) en forme de cylindre creux et l'arbre mélangeur (13), à savoir en établissant la force de pression (F) et **en ce que** notamment la portion de joint torique qui se raccorde sur le segment annulaire (35) n'est pas ou que faiblement comprimée ou soumise à une pression.

4. Robinetterie sanitaire selon l'une quelconque des revendications 1, 2 ou 3, **caractérisée en ce que** considérée dans la direction périphérique, une force de pression (F) exercée par l'élément de pression (35) n'agit de manière localement délimitée que sur l'interstice de vanne (25) et n'agit pas continûment dans la direction périphérique.

5. Robinetterie sanitaire selon la revendication 3 ou 4, **caractérisée en ce que** pour comprimer le segment annulaire (35) du joint torique (37), la paroi périphérique intérieure (29) de l'espace à arbre mélangeur (15) en forme de cylindre creux comporte un contour de soutien (39) et **en ce que** le contour de soutien (39) presse le segment annulaire (35) du joint torique (37) contre un fond inférieur (36) de rainure de la rainure annulaire (37) périphérique de l'arbre mélangeur, à savoir en établissant la force de pression (F) agissant sur l'interstice de vanne (25).

6. Robinetterie sanitaire selon la revendication 4 ou 5, **caractérisée en ce que** le contour de soutien (39) conçu sur la paroi périphérique intérieure (29) de l'espace à arbre mélangeur (15) en forme de cylindre creux est placé en alignement radial par rapport au segment annulaire (35) du joint torique (37), ainsi que par rapport à sa rainure annulaire (38) d'arbre mélangeur.

7. Robinetterie sanitaire selon l'une quelconque des revendications 3 à 6, **caractérisée en ce que**, considérée dans une coupe transversale (A-A) à angle droit par rapport à l'axe de rotation (D) de l'arbre mélangeur, la paroi périphérique intérieure (29) comporte sur le contour de soutien (39) un rayon de cylindre (r₁) qui est réduit de la valeur d'un désalignement radial (Δr) en comparaison du rayon de cylindre (r₂) de portions de paroi périphérique intérieure adjacentes au contour de soutien (39), dans la direction périphérique.

8. Robinetterie sanitaire selon l'une quelconque des revendications 3 à 7, **caractérisée en ce que** la rainure annulaire (38), notamment son fond inférieur (36) de rainure est symétrique en rotation par rapport à l'axe de rotation (D) de l'arbre mélangeur et/ou **en ce que** la paroi périphérique intérieure (29) est symétrique en rotation par rapport à l'axe de cylindre (Z) de l'espace à arbre mélangeur (15) en forme de cylindre creux, à savoir sous exception du contour de soutien (39) sur la paroi périphérique intérieure (29) et/ou **en ce que** l'axe de cylindre (Z) et l'axe de rotation (D) de l'arbre mélangeur sont coaxiaux l'un par rapport à l'autre.

9. Robinetterie sanitaire selon l'une quelconque des revendications 3 à 8, **caractérisée en ce que** dans l'état de fabrication non déformé, le joint torique (37) comporte une section transversale continûment constante, du côté périphérique.
